# EUROPEAN PATENT SPECIFICATION

(11) **EP 2 337 721 B1**
(45) Date of publication and mention of the grant of the patent: **19.11.2014**
(21) Application number: 09782833.9
(22) Date of filing: 09.09.2009
(51) Int. Cl.: B62D 49/00

(54) **Tractor**
Ackerschlepper
Tracteur agricole

(30) Priority: 18.09.2008 GB 0817048
(43) Date of publication of application: 29.06.2011
(73) Proprietor: Valtra Oy Ab, 44200 Suolahti (FI)
(72) Inventor: VILLE, Viitasalo, FIN-40250 Jyvaskyla (FI); MAILAS, Pekka, FIN-41450 Leppalahti (FI)
(74) Representative: Morrall, Roger
(86) International application number: PCT/EP2009/061708
(87) International publication number: WO 2010/031722

(56) References cited:
- EP-A- 0 649 781
- FR-A- 1 267 491
- FR-A- 2 761 742
- GB-A- 1 267 649
- US-A- 5 700 067
- US-A1- 2002 060 103

## Description

The invention relates to a tractor having a braking system and at least one braked wheel. In particular the invention relates to a tractor having an auxiliary hydraulic reservoir for providing an operating pressure to actuate a brake slave cylinder associated with the at least one braked wheel.

Agricultural tractors typically comprise a pedal-activated braking system wherein a driver thereof depresses the pedal to actuate a master piston connected therewith. Fluid displaced by a piston in a master cylinder serves to operate a piston in a slave cylinder which in turn actuates a brake mechanism such as brakes pads acting on a disc for example.

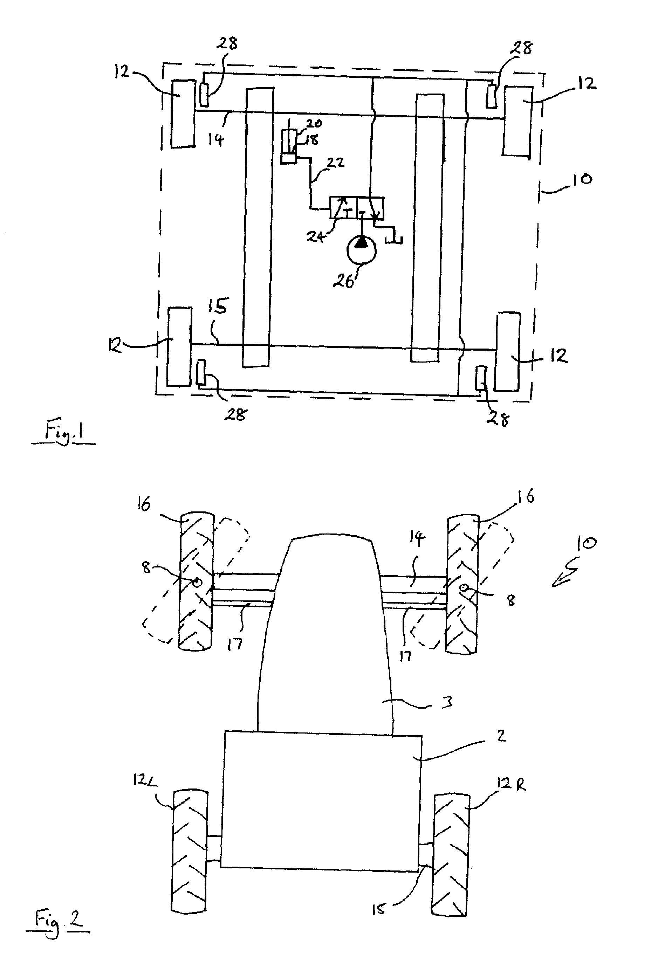

In a known system an operating pressure from an auxiliary hydraulic reservoir is exploited to provide the pressure to actuate the brake mechanism. Figure 1 shows such a system wherein a vehicle 10 comprises four braked wheels 12 mounted on the ends of front and rear axles 14, 15. The system comprises a pedal-operated piston 18 in a master cylinder 20. Depression of the pedal (not shown) creates a fluid pressure in hydraulic connection 22 which is transmitted to the input of a directional control valve 24.

Activation of the valve 24 permits an operating pressure from an auxiliary hydraulic reservoir 26 to be transmitted to the slave cylinders 28 of respective wheels 12.

By employing the auxiliary hydraulic reservoir 26 to provide an operating pressure, the force required to depress the pedal and therefore activate the brakes is reduced. However, any failure in the valve 24 will inevitably result in the failure of the braking system and thereby presents a significant safety concern.

US-5,700,067 discloses a hydraulic braking system having first and second slave cylinders for each wheel. FR-1,267,491 discloses a tractor having independent brake control for left and right wheels. US-2002/0060103 discloses a vehicle with a braking system that assists the steering of that vehicle.

It is an object of the present invention to provide a tractor with a braking system of simple design which does not ultimately fail in response to failure of the control valve.

In accordance with the present invention there is provided a tractor with a transmission system and a braking system comprising a pedal-operated master cylinder connected to a first slave cylinder by a hydraulic connection, and a boost valve for transmitting at least a portion of an operating pressure to a second slave cylinder in response to a pilot pressure communicated from the hydraulic connection, the first and second slave cylinders being arranged to brake the same wheel, wherein the transmission system comprises an auxiliary hydraulic reservoir which provides the source of the operating pressure. By connecting the output of the master cylinder to both the first slave cylinder and the boost valve, the driver can still exert a braking force even in the event of failure of the boost valve.

Advantageously, provision of the direct connection between the master cylinder and the first slave cylinder gives a feedback force to the pedal. This improves the control of the brake by the driver.

The auxiliary hydraulic reservoir is part of a transmission system of the vehicle. Advantageously this exploits the hydraulic pressure of an existing component in the vehicle and therefore an additional dedicated hydraulic reservoir is not necessary.

By providing separate slave cylinders for each of the pressure supply routes, the ratio of force exerted on the brakes by the direct connection from the master cylinder to the force exerted by the boost circuit can be adjusted by choosing different piston diameters in the respective slave cylinders for example.

The braking system in accordance with the invention may be employed in a tractor comprising a left-hand braked wheel and a right-hand braked wheel, wherein each wheel has a braking system and a respective brake pedal associated therewith.

The boost valve may comprise an electrically operated solenoid which actuates the boost valve to transmit at least a portion of the operating pressure to the slave cylinder apparatus in response to an electronic signal.

By providing an electrically operated solenoid which actuates the boost valve, braking of the wheels is no longer reliant on the depression of a pedal. This presents the option of additional functionality as described hereinafter.

### Steering Assist

In a preferred embodiment of the invention, a tractor comprises a pair of steerable wheels which each pivot in unison around respective vertical axes through a range of steering angles. Sensing means to sense the steering angle are provided. Each braked wheel has associated therewith a braking system according to the invention which brakes the associated wheel automatically in response to an electrical signal from the sensing means, the signal being sent to the associated solenoid when the steering angle in the direction corresponding to the side of the associated braked wheel exceeds a threshold so as to assist steering of the tractor.

When steering tractors in low friction conditions such as in muddy fields the minimum turning radius significantly increases. Traditionally, tractors comprise separate mechanical brake mechanisms and pedals for each of a left-hand braked wheel and a right-hand braked wheel. By braking on the left wheel only for example, the tractor is steered to the left thereby reducing the turning circle.

In a known arrangement the respective brake pedals are positioned adjacent one another in the cab allowing the driver to either operate the pedals simultaneously with his right foot, or individually to assist the steering of the tractor. A locking bar is often provided to lock the two pedals together for road working to avoid the risk of braking only on one wheel.

Repetitive operations in the field such as turning on the headland during ploughing can require many hundreds of depressions of the individual brake pedals. This can be tedious for the driver over long periods of time.

Advantageously, the provision of braking means which is not reliant on the depression of a pedal in combination with the sensing of the steering angle allows an automatic application of the individual brakes to assist the steering of the tractor. Therefore, repetitive intervention by the driver is no longer required.

Preferably, each braking system brakes the respective associated wheel in response to operation of a single brake pedal which is common to both braked wheels. By providing an automated mechanism to apply the left and right-hand brakes independently, the requirement for dedicated brake pedals for each braked wheel is removed. This feature is of particular benefit in certain jurisdictions where it is prohibited to drive a vehicle having independent brake pedals on the public highways.

The threshold is preferably greater than 90% of the steering range from a straight ahead direction to the steering limit. In other words, the left-hand brake is automatically applied when the steering angle exceeds 90% of the available left-hand steering lock (full left-hand lock being 100%).

Preferably, the braking means only brakes the associated braked wheel automatically when the vehicle groundspeed is below a predetermined threshold. This avoids the risk of excessive steering at high speeds resulting in overturning of the tractor.

Preferably further still the operator can selectively activate and deactivate an automatic mode which allows the braking means to operate automatically. Therefore, the automatic braking on individual wheels can be disabled if required.

The braking means may only brake the associated braked wheel automatically when the steering angle in the direction corresponding to the side of the associated braked wheel exceeds said threshold for a predetermined period of time.

The sensing means may sense the steering angle by measuring the rotational position of a vertical shaft to which one of the steerable wheels is mounted.

### Hill Hold

In another preferred embodiment the solenoid is automatically activated when a transmission is in a neutral gear ratio (or when the clutch pedal is engaged) and when the tractor is on a sloped incline so as to prevent freewheeling movement of the tractor in either direction. In this case, the brakes may be automatically activated when an automatic gear shift is in progress.

It should be understood that the term "neutral gear ratio" used hereinafter is intended to encompass any situation in which the drive source such as an internal combustion engine, is drivingly disengaged from the wheels. Therefore, this includes the situation wherein a gear is selected in the transmission but the drive clutch is disengaged by depression of the clutch pedal.

When fitted with a shuttle gearbox, the automatic activation of the brakes can be exploited to brake out any speed in excess of a predetermined threshold under which a change of direction can be safely carried out.

### Anti-Skid

In yet another preferred arrangement an antiskid valve is provided to release the operating pressure from the second slave cylinder in response to a detected locked wheel.

Advantageously, the provision of a dual slave cylinder arrangement allows only a portion of the braking force to be released in the event of a skid. This can be set so as to be a sufficient portion to allow the wheel to turn before reapplying the full braking force.

Further advantages of the invention will become apparent from the following description of specific embodiments with reference to the appended figures in which: Figure 1 is a schematic diagram representing a tractor having a known braking system; Figure 2 is a schematic plan view of a tractor; Figure 3 is a schematic diagram of a braking system in accordance with a first embodiment of the invention; and, Figure 4 is a schematic diagram of a braking system in accordance with a second embodiment of the invention.

With reference to Figure 2, a tractor 10 comprises a driver's cab 2, a bonnet 3, front axle 14 and rear axle 15. A pair of steerable wheels 16 are mounted on respective ends of the front axle 14. Hydraulically actuated steering rods 17 are mounted from the tractor chassis to the steerable wheels 16 which cause the wheels 16 to pivot in unison around respective vertical axes 8 through a range of steering angles.

Figure 2 shows the steerable wheels in a straight ahead direction as well as a direction pivoted to the right (shown by the dashed line).

The tractor further comprises a pair of rear braked wheels 12L and 12R mounted on respective ends of the rear axle 15.

Each of the rear braked wheels 12L, 12R have associated therewith braking means which serve to brake the associated wheel.

The tractor shown in Figure 1 merely provides an example vehicle upon which a braking system in accordance with the invention can be implemented. Two example embodiments of the invention will now be described in relation to the tractor of Figure 1. It should be appreciated that the tractor 10 is a wheeled vehicle having at least one braked wheel 12 and a hydraulic reservoir 26, represented by a pump symbol in figures 1, 3 and 4, having an operating pressure.

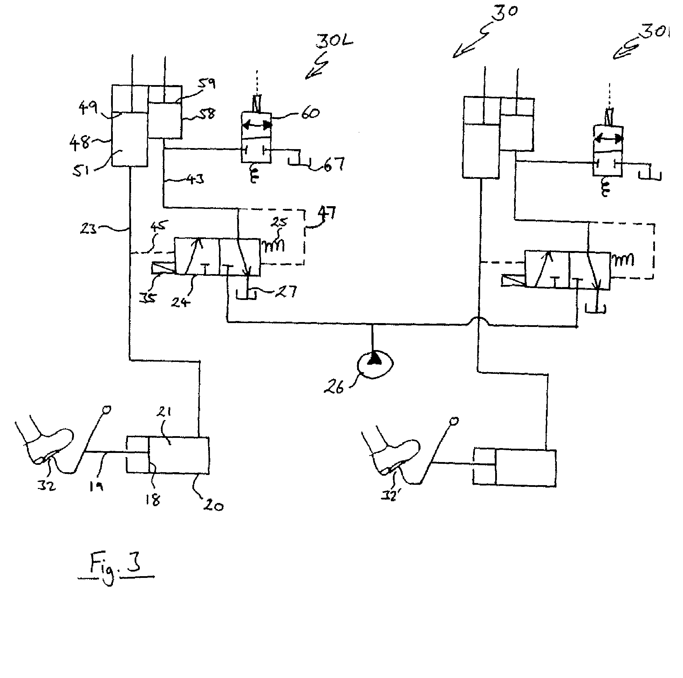

Turning now to Figure 3, a brake system 30 in accordance with a first embodiment of the invention is fitted to the tractor 10 which comprises two braked wheels 12L, 12R. Each braked wheel has an associated dedicated braking circuit and pedal. A first pedal 32 serves to operate the brake on a left-hand (rear) wheel t2L and a second pedal 32' serves to operate the brake on a right-hand (rear) wheel 12R. As is common in tractors, the pedals 32,32' are positioned adjacent one another in the cab to allow the driver to operate the pedals simultaneously with one foot. Alternatively, the driver may operate the pedals 32,32' individually to aid turning of the tractor, for example in wet and muddy conditions. Furthermore, the pedals can be optionally locked together with a locking bar (not shown).

The system 30 comprises a left-hand brake circuit 30L for operation of the left-hand brake and a right-hand brake circuit 30R for operation of the right-hand brake. It should be appreciated that the following description of the left-hand brake circuit 30L will also apply to the identical right-hand brake circuit 30R.

The circuit 30L comprises a master cylinder 20 and a piston 18 located and moveable therein. The piston 18 is actuated by movement of the left-hand pedal 32L which is depressed by the driver's foot and connected to the piston 18 by a piston rod 19. Movement of the piston 18 displaces fluid in a chamber 21 and causes the resultant hydraulic pressure to be delivered to a first slave cylinder 48 via a hydraulic connection 23.

The first slave cylinder 48 comprises a piston 49 which is moved as a result of hydraulic pressure in the first slave cylinder chamber 51. It will be appreciated that movement of the piston 49 actuates the brakes (not shown) connected thereto which includes brake pads which exert a force on a brake disc associated with the left-hand rear wheel 12L of the tractor 10.

The hydraulic connection 23 provides a first mechanism for activation of the left-hand brake by depression of the left-hand brake pedal 32L.

The circuit 30L further comprises a directional control 'boost' valve 24 which provides a second mechanism to activate the left-hand brake in response to depression of the left-hand brake pedal 32L. The boost valve 24 comprises three ports and is operable between two positions. A spring 25 biases the valve into a first position (shown in Figure 3) wherein a tank line 27, having a relatively low hydraulic pressure, is connected to a second slave cylinder 58 via a boost connection 43.

A pilot pressure is delivered from the hydraulic connection 23 to the valve 24 by a hydraulic pilot connection 45 to force the valve 24 into a second position. A second pilot line 47 is connected between the boost connection 43 and the valve 24 to provide a reactant pressure to that provided by the pilot connection 45. This ensures that the pressure in boost connection 43 is dependent upon the pressure in pilot line 45.

In the second position the valve 24 connects the transmission 26 of the tractor to the boost connection 43. In this way the operating pressure of the transmission 26 is delivered to the second slave cylinder 58 resulting in movement of the piston 59 located therein and activation of the left-hand brake.

It will be appreciated from Figure 3 that the transmission 26 serves to provide the operating pressure to both the left-hand circuit 30L and the right-hand circuit 30R.

The provision of two slave cylinders 48,58 to operate a common brake mechanism allows the ratio of forces applied by the direct pedal mechanism and the boost circuit to be adjusted. For example, in this embodiment, the ratio of the force applied by the second slave cylinder 58 to the force applied by the first slave cylinder 48 is 4:1. However, it will be appreciated that this ratio can be adjusted by changing the sizing of the respective pistons 49,59 and/or the ends of the boost valve spool connected respectively to pilot lines 45, 47.

The valve 24 and boost connection 43 provide the second mechanism for activation of the brakes in response to depression of the brake pedal 32. In a similar manner to the known system shown in Figure 1, the relatively high operating pressure of the vehicle transmission is exploited to provide a braking force deliverable to the second slave cylinder 58. However, in accordance with the invention, the operating pressure is employed in a boost circuit to supplement the pressure conveyed directly from the pedal 32 to the first slave cylinder 48 via the connection 23.

By avoiding sole reliance on the operating pressure of the transmission as per the known arrangement, a backup mechanism is provided wherein the brakes can still be applied by the driver even in the event of failure of the valve 24.

Furthermore, failure of either of the two mechanisms does not ultimately prevent the driver from applying the brakes by activation of the pedal. For example, in the event of the boost connection 43 failing by way of a puncture in the pipe, the first slave cylinder can still be actuated.

The boost valve 24 further comprises an electrically operated solenoid 35 which actuates the boost valve to transmit at least a portion of the operating pressure to the second slave cylinder 58 in response to an electrical signal.

In this case, the solenoid 35 provides a hill-hold function in which the brakes are activated in response to an electronic signal to prevent the tractor from rolling down an incline. For example, the solenoid may be activated by a brake control system (not shown) when the transmission is in neutral or when the tractor is stationary with the drive clutch disengaged. Alternatively, or furthermore, and especially in the case of an automatic transmission, the hill-hold function may automatically activate the brakes during a change of gear, particularly a change of direction.

For a tractor fitted with an automatic "shuttle" gearbox in which a direction change can be commanded without depression of a clutch, the solenoid-activated brake can be employed to automatically reduce the speed of the tractor before the direction change is made within the transmission.

In this case, a transmission control system may request a reduction in speed. In response to this request, the brake control system activates the solenoid for a sufficient duration of time to brake the speed down to a desired level, less than 10kph for example. Once the reduction in speed is detected, the transmission control system executes the direction/ratio change.

The circuit 30L further comprises an antilock brake mechanism which includes a solenoid-activated dump valve 60 which connects the boost connection 43 to a dump reservoir 67 in response to an electronic signal sent thereto. This operates automatically in response to the detection of a locked wheel caused by a heavy brake application for example. The antilock brake function affects only the second slave cylinder 58, thus not affecting the braking force applied directly by depression of the pedal 32. Furthermore, in the event of failure of dump valve 60, a braking force can still be applied to the wheel via connection 23 and slave cylinder 48.

In an alternative arrangement (not shown) the solenoid-activated dump valve 60 can be integrated into the boost valve 24. In the case, the boost valve 24 is simply provided with an additional solenoid to force the valve into the first (non-braking) position. Therefore, in the event of a locked wheel being detected, the additional solenoid releases the boost braking force by controlling of the boost valve 24.

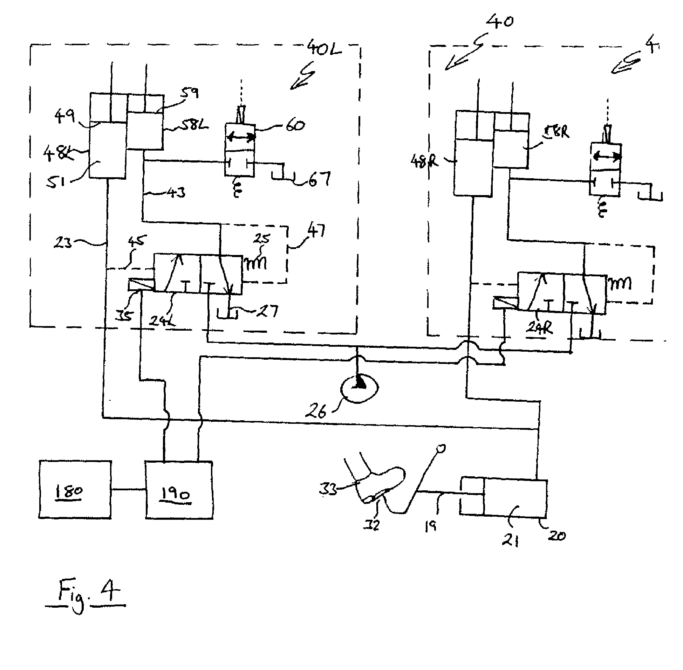

A second embodiment of the invention is shown in Figure 4. Again, the braking system 40 will be described with reference to the left hand circuit 40L but it should be appreciated that the same components are included in the right hand circuit 40R.

A single pedal 32 (common to both circuits 40L,40R) is depressed by driver's foot 33 and displaces fluid in the master cylinder chamber 21 which is communicated to a first slave cylinder 48L by hydraulic connection 23. The displaced fluid is fed into the chamber 51 of first slave cylinder 48L thereby causing movement of the piston 49 which applies a force to the brakes of braked wheel 19L.

The braking system 40L also comprises a boost valve 24L which serves to selectively communicate the operating pressure from the transmission to the slave cylinder apparatus by actuation thereof. In a similar manner to the embodiment of Figure 3, the operating pressure acts on a piston 59 in the second slave cylinder 58L by means of hydraulic connection 43.

The boost valves 24L, 24R are actuated by one of two mechanisms, a) application of a pilot hydraulic pressure from pilot line 45 or b) by actuation of solenoid 35.

Sensing means 180 mounted on the front axle 14 serve to measure the steering angle of the steerable wheels 16. For the purpose of describing this arrangement a steering angle of 0° will equate to a straight ahead direction whereas a steering angle of 100% will equate to full left hand lock or full right hand lock.

The steering angle sensed by sensing means 180 is communicated to the control unit 190. The control unit 190 communicates electrical signals to the respective solenoids 35 to automatically activate one of the boost valves 24L, 24R.

In the event that the steering angle sensed by sensing means 180 exceeds 90% to the left hand side for a period greater than one second then the control means activates solenoid 35 so as to cause automatic application of the left hand brake. This serves to assist the steering of the tractor to the left hand side. As soon as the steering angle drops below the threshold of 90% then the signal sent by the control unit 190 to the solenoid 35 is discontinued allowing the spring 25 to return the valve to the first position thus removing the braking force.

Similarly in the event that the sensed steering angle exceeds 90% to the right for a period greater than one second, the control means 190 sends a signal to the other solenoid so as to cause application of the right hand brake thus assisting steering of the tractor to the right.

As a further feature of the embodiment shown in Figure 4 the control unit 190 is also supplied with data regarding the speed of the vehicle. In the event that the vehicle speed exceeds 2kph then automatic operation of the brakes by activation of the respective solenoids 35 will not occur irrespective of the steering angle sensed.

Automatic operation of the brakes by control unit 190 can be selectively activated and deactivated by the driver using a simple toggle switch located in the cab (not shown).

It should be appreciated that the parameters which determine when the control unit 190 activates the solenoids 35 given in the above description can be varied. For example, automatic activation of the left hand wheel may only occur when the steering angle exceeds 95% to the left. In another example the automatic activation of the brakes by control unit 190 maybe prohibited at ground speeds above 1 kph. In yet another example, the predetermined period at which the steering angle exceeds the threshold may be 2 seconds or even as much as 5 seconds. Any of these parameters may or may not be adjustable by the driver located in the cab 2.

Although the embodiment of Figure 4 described above comprises a single brake pedal 32 for activation of both left hand and right hand brakes it is envisaged that the more traditional brake pedal arrangement can be employed without deviating from the scope of the invention. In this case a first brake pedal is depressed to activate the left hand brake and a second pedal is depressed to activate the right hand brake as per the embodiment of Figure 3. Likewise, a single pedal could replace the two pedals 32,32' in Figure 3, with a common hydraulic connection to both of the first slave cylinders 48.

In summary there is provided a tractor comprising a braking system and a dual slave cylinder arrangement. A pedal-operated master cylinder is connected directly to a first slave cylinder by a hydraulic connection. An auxiliary hydraulic reservoir having an operating pressure is selectively connected to a second slave cylinder via a boost valve in response to a pilot pressure communicated from the hydraulic connection. By exploiting the pressure from an auxiliary hydraulic reservoir to provide a boost braking force, the force exerted by the driver in normal use to depress the brake pedal is reduced. However, in event of failure of the boost valve, the brakes can still be applied by a direct application of force from the pedal.

## Claims

1. A tractor (10) with a transmission system and a braking system (30;40) comprising a pedal-operated master cylinder (20) connected to a first slave cylinder (48) by a hydraulic connection (23), and a boost valve (24) for transmitting at least a portion of an operating pressure to a second slave cylinder (58) in response to a pilot pressure communicated from the hydraulic connection (23), the first and second slave cylinders (48;58) being arranged to brake the same wheel, wherein the transmission system comprises an auxiliary hydraulic reservoir (26) which provides the operating pressure.

2. A tractor according to preceding claim 1, wherein the boost valve (24) comprises an electrically operated solenoid (35) which actuates the boost valve (24) to transmit at least a portion of the operating pressure to the second slave cylinder in response to an electronic signal.

3. A tractor according to Claim 1 or 2, comprising a left-hand braked wheel (12L) and a right-hand braked wheel (12R), each having a braking system of the construction described and a respective brake pedal (32,32') associated therewith.

4. A tractor according to Claim 1 or 2, comprising a pair of steerable wheels (16) which each pivot in unison around respective vertical axes (8) through a range of steering angles, sensing means (180) to sense the steering angle, and a braked wheel (12L,12R) on each of the left and right side of the tractor, each braked wheel having associated therewith a braking system of the construction described which brakes the associated wheel automatically in response to an electrical signal from the sensing means, the signal being sent to the associated solenoid when the steering angle in the direction corresponding to the side of the associated braked wheel exceeds a threshold so as to assist steering of the tractor.

5. A tractor according to Claim 4, wherein the threshold is greater than 90% of the steering range from a straight ahead direction to the steering limit.

6. A tractor according to Claim 4 or 5, wherein the braking system only brakes the associated braked wheel automatically when the vehicle groundspeed is below a predetermined threshold.

7. A tractor according to any one of Claims 4 to 6, wherein an operator can selectively activate an automatic mode which allows the braking system to operate automatically.

8. A tractor according to any one of Claims 4 to 7, wherein the braking system only brakes the associated braked wheel automatically when the steering angle in the direction corresponding to the side of the associated braked wheel exceeds said threshold for a predetermined period of time.

9. A tractor according to any one of Claims 4 to 8, wherein the sensing means sense the steering angle by measuring the rotational position of a vertical shaft to which one of the steerable wheels is mounted.

10. A tractor according to any one of Claims 4 to 9, wherein each braking system brakes the respective associated wheel in response to operation of a single brake pedal which is common to both braked wheels.

11. A tractor according to Claim 2, wherein the solenoid is automatically activated when a transmission is in a neutral gear ratio and when the tractor is on a sloped incline so as to prevent freewheeling movement of the tractor.

12. A tractor comprising a braking system according to any one of claims 1 or 2, wherein an antiskid valve (60) is provided to release the operating pressure from the second slave cylinder in response to a detected locked wheel.

## Patentansprüche

1. Traktor oder Zugfahrzeug (10) mit einem Übertragungs- oder Getriebesystem und einem Bremssystem (30; 40) mit einem pedalbetätigten Master-Zylinder (20), welcher durch eine hydraulische Verbindung (23) mit einem ersten Slave-Zylinder (48) verbunden ist, einem Boost-Ventil (24) zur Übertragung zumindest eines Teils eines Betriebsdrucks zu einem zweiten Slave-Zylinder (58) in Abhängigkeit von einem Steuerdruck, welcher von der hydraulischen Verbindung (23) übertragen wird, wobei der erste und zweite Slave-Zylinder (48; 58) geeignet angeordnet sind, um dasselbe Rad abzubremsen, und das Übertragungs- oder Getriebesystem einen hydraulischen Hilfsbehälter besitzt, welcher den Betriebsdruck bereitstellt.

2. Traktor oder Zugfahrzeug nach Anspruch 1, wobei das Boost-Ventil (24) einen elektrisch betätigten Elektromagneten (35) besitzt, welcher das Boost-Ventil (24) betätigt zur Übertragung zumindest eines Teils des Betriebsdrucks zu dem zweiten Slave-Zylinder in Abhängigkeit von einem elektronischen Signal.

3. Traktor oder Zugfahrzeug nach Anspruch 1 oder 2 mit einem linken gebremsten Rad (12L) und einem rechten gebremsten Rad (12R), welche jeweils ein Bremssystem mit der beschriebenen Konstruktion und ein zugeordnetes Bremspedal (32, 32') besitzen.

4. Traktor oder Zugfahrzeug nach Anspruch 1 oder 2 mit einem Paar lenkbarer Räder (16), die jeweils in gemeinsamer Bewegung um zugeordnete vertikale Achsen (8) über einen Bereich von Lenkwinkeln verschwenken, mindestens einem sensierenden Organ (180) zum Sensieren des Lenkwinkels und einem gebremsten Rad (12L, 12R) auf der rechten und linken Seite des Traktors oder Zugfahrzeugs, wobei jedem gebremsten Rad ein Bremssystem der zuvor beschriebenen Konstruktion zugeordnet ist, welches in Abhängigkeit von einem elektrischen Signal von dem sensierenden Organ das zugeordnete Rad automatisch bremst, wobei das Signal zu dem zugeordneten Elektromagneten gesendet wird, wenn der Lenkwinkel in der Richtung, die mit der Seite korrespondiert, auf welcher das zugeordnete gebremste Rad angeordnet ist, einen Schwellwert überschreitet, um das Lenken des Traktors oder Zugfahrzeugs zu unterstützen.

5. Traktor oder Zugfahrzeug nach Anspruch 4, wobei der Schwellwert größer als 90 % des Lenkbereichs von einer Geradeaus-Richtung zu der Lenk-Begrenzung ist.

6. Traktor oder Zugfahrzeug nach Anspruch 4 oder 5, wobei das Bremssystem lediglich das zugeordnete gebremste Rad automatisch bremst, wenn die Geschwindigkeit des Fahrzeugs unterhalb eines vorbestimmten Schwellwertes ist.

7. Traktor oder Zugfahrzeug nach einem der Ansprüche 4 bis 6, wobei ein Betreiber selektiv einen automatischen Modus aktivieren kann, welcher ermöglicht, dass das Bremssystem automatisch arbeitet.

8. Traktor oder Zugfahrzeug nach einem der Ansprüche 4 bis 7, wobei das Bremssystem das zugeordnete gebremste Rad lediglich dann automatisch bremst, wenn der Lenkwinkel in der Richtung korrespondierend zu der Seite des zugeordneten gebremsten Rades den Schwellwert für eine vorbestimmte Zeitspanne überschreitet.

9. Traktor oder Zugfahrzeug nach einem der Ansprüche 4 bis 8, wobei die sensierenden Organe den Lenkwinkel durch Messung der Rotationsstellung einer vertikalen Welle sensieren, mit welcher das lenkbare Rad montiert ist.

10. Traktor oder Zugfahrzeug nach einem der Ansprüche 4 bis 9, wobei jedes Bremssystem das jeweilige zugeordnete Rad bremst in Abhängigkeit von der Betätigung eines einzelnen Bremspedals, welches beiden gebremsten Rädern gemein ist oder zum Bremsen beider gebremster Räder dient.

11. Traktor oder Zugfahrzeug nach Anspruch 2, wobei der Elektromagnet automatisch aktiviert wird, wenn sich ein Getriebe in einer neutralen Übersetzung befindet und wenn sich der Traktor oder das Zugfahrzeug auf einer Neigung befindet, um eine freilaufende Bewegung des Traktors oder Zugfahrzeugs zu vermeiden.

12. Traktor oder Zugfahrzeug mit einem Bremssystem nach einem der Ansprüche 1 oder 2, wobei ein Antischlupf-Ventil (60) bereitgestellt ist zur Freigabe des Betriebsdrucks von dem zweiten Slave-Zylinder in Abhängigkeit von einem detektierten blockierten oder verriegelten Rad.

## Revendications

1. Tracteur (10) avec un dispositif de transmission et un dispositif de freinage (30 ; 40) comprenant un maître-cylindre commandé par pédale (20) relié à un premier cylindre récepteur (48) par une liaison hydraulique (23), et une vanne auxiliaire (24) destinée à transmettre au moins une partie d'une pression de service à un second cylindre récepteur (58) en réponse à une pression pilote communiquée à partir de la liaison hydraulique (23), les premier et second cylindres récepteurs (48 ; 58) étant agencés de manière à freiner la même roue, dans lequel le dispositif de transmission comprend un réservoir hydraulique auxiliaire (26) qui assure la pression de service.

2. Tracteur selon la revendication 1 précédente, dans lequel la vanne auxiliaire (24) comprend un solénoïde (35) qui active la vanne auxiliaire (24) afin de transmettre au moins une partie de la pression de service au second cylindre récepteur en réponse à un signal électronique.

3. Tracteur selon la revendication 1 ou 2, comprenant une roue gauche freinée (12L) et une roue droite freinée (12R), chacune comportant un dispositif de freinage présentant la construction décrite et une pédale de frein respective (32, 32') associée à ce dernier.

4. Tracteur selon la revendication 1 ou 2, comprenant une paire de roues directrices (16) qui pivotent chacune à l'unisson autour d'axes verticaux respectifs (8) sur une plage d'angles de braquage, des moyens de détection (80) afin de détecter l'angle de braquage, et une roue freinée (12L, 12R) sur chacun des côtés gauche et droit du tracteur, chaque roue freinée étant associée à un dispositif de freinage présentant la construction décrite qui freine la roue associée de manière automatique en réponse à un signal électrique à partir du moyen de détection, le signal étant envoyé au solénoïde associé lorsque l'angle de braquage dans la direction correspondant au côté de la roue freinée associée dépasse un seuil de manière à assister la direction du tracteur.

5. Tracteur selon la revendication 4, dans lequel le seuil est supérieur à 90% de la plage de braquage par rapport à une direction rectiligne vers l'avant jusqu'à la limite de braquage.

6. Tracteur selon la revendication 4 ou 5, dans lequel le dispositif de freinage freine la roue freinée associée de manière automatique uniquement lorsque la vitesse au sol de véhicule est inférieure à un seuil prédéterminé.

7. Tracteur selon l'une quelconque des revendications 4 à 6, dans lequel un opérateur peut activer de manière sélective un mode automatique qui assure le fonctionnement automatique du dispositif de freinage.

8. Tracteur selon l'une quelconque des revendications 4 à 7, dans lequel le dispositif de freinage freine uniquement la roue freinée associée de manière automatique lorsque l'angle de braquage dans la direction correspondant au côté de la roue freinée associée excède ledit seuil pendant une période prédéterminée.

9. Tracteur selon l'une quelconque des revendications 4 à 8, dans lequel les moyens de détection détectent l'angle de braquage en mesurant la position angulaire d'un axe vertical sur lequel l'une des roues directrices est montée.

10. Tracteur selon l'une quelconque des revendications 4 à 9, dans lequel chaque dispositif de freinage freine la roue associée respective en réponse à la commande d'une pédale de freinage unique qui est commune aux deux roues freinées.

11. Tracteur selon la revendication 2, dans lequel le solénoïde est activé de manière automatique lorsqu'une transmission est à un rapport de transmission neutre et lorsque le tracteur est sur un plan incliné de manière à empêcher le déplacement en roue libre du tracteur.

12. Tracteur comprenant un dispositif de freinage selon l'une quelconque des revendications 1 ou 2, dans lequel une vanne antipatinage (60) est agencée de manière à réduire la pression de service du deuxième cylindre récepteur en réponse à la détection d'un blocage de roue.
